# FASCICULE DE BREVET EUROPEEN

(11) **EP 1 873 939 B1**
(45) Date de publication et mention de la délivrance du brevet: **29.02.2012**
(21) Numéro de dépôt: 07111123.1
(22) Date de dépôt: 27.06.2007
(51) Int. Cl.: H04B 10/08, G01M 11/00

(54) **Terminal de réseau optique de télécommunication, installation comprenant ce terminal et procédé de détection d'une coupure dans des moyens de transmission optique**
Endgerät für ein optisches Telekommunikationsnetzwerk, Einstellung mit diesem Endgerät und Verfahren zur Detektion von Unterbrechungen in optischen Übertragungsmitteln
Telecommunications optical network terminal, installation comprising this terminal and method for detecting cutoff in the optical transmission means.

(30) Priorité: 30.06.2006 FR 0652757
(43) Date de publication de la demande: 02.01.2008
(73) Titulaire: FRANCE TELECOM, 75015 Paris (FR)
(72) Inventeur: Genay, Naveena, 22300 Lannion (FR); Courant, Jean-Luc, 22700 Perros Guirec (FR); Chanclou, Philippe, 22300 Lannion (FR)
(74) Mandataire: Santarelli

(56) Documents cités:
- EP-A1- 0 615 358
- JP-A- 1 276 039
- US-A- 5 285 305
- US-A- 5 598 289
- US-A- 5 767 956

## Description

La présente invention concerne un terminal de réseau optique de télécommunication, une installation comprenant ce terminal et un procédé de détection d'une coupure dans des moyens de transmission optique.

Elle s'applique plus particulièrement à un réseau optique de télécommunication comprenant un terminal central relié à des terminaux clients par des moyens de transmission optique classiques, par exemple des fibres optiques de télécommunication et utilisant un multiplexage en longueur d'onde (en anglais, « Wave-length Division Multiplexed » (WDM)).

Dans ce qui suit, on appellera signal descendant un signal se propageant du terminal central vers un terminal client, et signal montant un signal se propageant dans le sens contraire.

On connaît déjà dans l'état de la technique un terminal de réseau optique de télécommunication, du type comprenant :
- au moins un dispositif de génération de signaux optiques descendants, et
- au moins un dispositif de réception de signaux optiques montants,
les signaux optiques étant destinés à circuler dans des moyens de transmission optique reliés au terminal, tels que des fibres optiques.

Les fibres optiques de télécommunication sont susceptibles d'être endommagées, voire cassées du fait de leurs expositions notamment aux intempéries (fibres optiques aériennes), à des rongeurs, aux travaux de génie civil, aux inondations (fibres optiques enterrées).

Il est par conséquent utile de pouvoir détecter une coupure d'une fibre optique de télécommunication et de la localiser rapidement afin de pouvoir intervenir dans un délai le plus court possible.

US 5 767 956 et US 5 518 289 décrivent des moyens de mesure de la durée d'aller-retour d'une impulsion lumineuse.

En général, pour détecter une coupure, les réseaux actuels, utilisant pour la plupart un multiplexage temporel (en anglais, « Time Division Multiplexed » (TDM)), mettent en oeuvre, par exemple, une technique de réflectométrie dite temporelle.

Cette technique de réflectométrie est basée sur l'analyse du temps de retour d'une impulsion lumineuse de longueur d'onde unique émise du terminal central et réfléchie partiellement par rétro-diffusion de Rayleigh.

Or, une telle technologie est inadaptée pour un réseau de type WDM, notamment du fait de la multiplicité des longueurs d'onde des signaux optiques circulant dans un tel réseau de télécommunication optique (à chaque terminal client correspond une longueur d'onde d'émission du signal).

En effet, un réseau de type WDM comprend généralement un terminal central relié à un noeud d'accès client par une fibre optique principale, le noeud d'accès étant alors relié à chaque terminal client par une fibre optique secondaire.

Chaque fibre secondaire reliant un terminal client au point d'accès du réseau de télécommunication ne permet que la transmission de signaux de longueurs d'onde comprises dans une bande passante allouée au terminal client et l'impulsion lumineuse de longueur d'onde unique ne peut être transmise que dans la fibre optique secondaire du terminal client ayant une bande passante comprenant la longueur d'onde de l'impulsion.

Par conséquent, cette technologie est inadaptée à un réseau de télécommunication WDM du fait de son inefficacité pour détecter une coupure se produisant sur des fibres optiques secondaires.

L'invention permet de remédier à cet inconvénient en fournissant un terminal, par exemple un terminal central, pouvant être implanté facilement dans un réseau de télécommunication WDM et permettant de détecter une coupure de fibres optiques en n'importe quel point du réseau.

A cet effet, l'invention a pour objet un terminal de réseau de télécommunication selon la revendication 1.

De façon connue en soi, un effet Brillouin stimulé ou encore diffusion Brillouin stimulée (acronyme anglais SBS pour « Stimulated Brillouin Scattering ») est un phénomène optique non linéaire à l'origine d'un signal optique se propageant en sens inverse de celui du signal émis dans les moyens de transmission optique.

Lorsqu'une coupure intervient dans les moyens de transmission, le signal rétro-diffusé Brillouin voit la valeur de sa puissance optique modifiée. Cette modification de puissance du signal rétro-diffusé est fonction de la longueur de fibre optique parcourue par le signal continu descendant.

Grâce à l'invention, en analysant la puissance du signal de rétro-diffusion de Brillouin, il est possible à partir d'une valeur de cette puissance de déterminer la longueur de fibre optique parcourue par le signal optique continu de rétro-diffusion de Brillouin et ainsi de déduire, à partir de la longueur déterminée, la localisation d'une coupure éventuelle dans une fibre optique du réseau de télécommunication.

On entendra par puissance initiale d'un signal, la puissance d'émission de la source optique émettant le signal.

Par exemple, le seuil de puissance d'apparition d'un effet Brillouin stimulé est défini comme étant la puissance initiale du signal optique continu descendant minimale pour laquelle la puissance de ce signal optique continu transmis dans les fibres optiques jusqu'au terminal client est égale à la puissance du signal optique de rétro-diffusion de Brillouin de longueur d'onde λ^{'}ᵢᵢ.

Par ailleurs, le signal de rétro-diffusion de Brillouin a une longueur d'onde λ^{'}ii sensiblement différente de la longueur d'onde λᵢᵢ du signal optique continu descendant.

Par exemple, pour un signal optique continu descendant de longueur d'onde λᵢᵢ = 1550 nm, le signal optique de rétro-diffusion de Brillouin aura une longueur d'onde d'environ λᵢᵢ = 1550,088 nm.

En outre, de façon connue en soi, le signal optique continu descendant transmis dans le réseau de télécommunication jusqu'à un terminal client peut être avantageusement modulé et réfléchi par ce terminal client pour la transmission de données de ce terminal client vers le terminal central à la longueur d'onde λᵢᵢ.

Comme le signal de rétro-diffusion de Brillouin a une longueur d'onde λ^{'}ᵢᵢ différente de la longueur d'onde λᵢᵢ du signal optique modulé montant, le signal de rétro-diffusion de Brillouin ne perturbe pas le signal montant, porteurs de données.

Ainsi, grâce à l'invention, la détection de la coupure peut être effectuée sans interruption de la transmission de données vers les terminaux clients.

Par ailleurs, avantageusement, afin de déterminer la longueur de fibre coupée, les moyens d'analyse comprennent des moyens de mesure d'une valeur de la puissance du signal et des moyens de détermination d'une valeur de longueur de fibre optique en fonction de la valeur de la puissance mesurée.

Le dispositif de génération comprend également des moyens pour générer un signal optique modulé descendant dans les moyens de transmission optique de longueur d'onde λᵢ pour la transmission de données, par exemple vers un terminal client.

De ce fait, la détection de coupure peut être effectuée pendant une transmission bidirectionnelle de données entre le terminal central et le terminal client sans interruption de la transmission de données.

En outre, avantageusement, les moyens d'analyse comprennent une unité de détection du signal optique de rétro-diffusion de Brillouin et une unité de traitement de signal. L'unité de détection comprend au moins un détecteur destiné à convertir le signal optique en un signal électrique et l'unité de traitement de signal comprend les moyens de mesure d'une valeur de la puissance du signal et les moyens de détermination d'une valeur de longueur de fibre optique en fonction de la valeur de la puissance mesurée.

Dans une variante de réalisation, les moyens de détermination comprennent des moyens de mémorisation d'une table de correspondance entre un ensemble de valeurs de longueur de fibre et un ensemble de valeurs de puissance et des moyens de comparaison de la valeur de la puissance mesurée avec les valeurs de puissance de la table de correspondance.

Par exemple, l'unité de détection comprend un unique détecteur optique.

Le détecteur optique comprend par exemple une photodiode sensible aux longueurs d'onde λ^{'}ᵢᵢ et λᵢᵢ. Ainsi, l'unité de détection met en oeuvre des moyens relativement simples et peu coûteux.

Dans ce cas, afin de discriminer le signal électrique porteur de données modulé du signal électrique continu correspondant au signal de rétro-diffusion de Brillouin, l'unité de détection comprend un circuit électrique comprenant une première branche de transmission électrique d'un signal continu munie d'un filtre passe-bas, raccordée électriquement au détecteur optique et à l'unité de traitement du signal électrique et par exemple une deuxième branche de transmission électrique d'un signal modulé munie d'un filtre passe-haut, raccordée électriquement au détecteur optique et à des moyens de démodulation du signal modulé du dispositif de réception.

Dans une variante, afin d'assurer un meilleur filtrage des signaux, l'unité de détection comprend des premier et deuxième détecteurs optiques, par exemple deux photodiodes.

Dans ce cas, les premier et deuxième détecteurs optiques sont reliés respectivement à des première et deuxième branches de transmission optique, la première branche de transmission optique étant munie d'un filtre optique passe-bande centré sur la longueur d'onde du signal de rétro-diffusion de Brillouin de longueur d'onde λᵢᵢ.

L'unité de détection comprend une première branche de transmission électrique d'un signal continu munie d'un filtre électrique passe-bas, raccordée électriquement au premier détecteur optique et à l'unité de traitement du signal et une deuxième branche de transmission électrique d'un signal modulé munie d'un filtre électrique passe-haut, raccordée électriquement au deuxième détecteur optique et à des moyens de démodulation du signal modulé du dispositif de réception.

Ainsi, dans cette variante, l'association d'un filtrage optique et d'un filtrage électrique permet d'améliorer la qualité du filtrage et par conséquent, la précision de la mesure de la puissance du signal de rétro-diffusion de Brillouin.

L'invention a encore pour objet une installation optique de réseau de télécommunication comprenant un terminal central relié à au moins un terminal client par l'intermédiaire de moyens de transmission optique **caractérisé en ce que** le terminal central est un terminal selon l'invention.

L'invention a encore pour objet un procédé: selon la revendication 11.

L'invention sera mieux comprise à la lecture de la description qui va suivre, donnée uniquement à titre d'exemple et faite en se référant aux dessins dans lesquels :
- la figure 1 est une vue schématique d'une installation de réseau optique de télécommunication selon l'invention ;
- la figure 2 est une vue schématique d'un dispositif de génération du terminal de la figure 1 ;
- la figure 3 est un diagramme de répartition des longueurs d'onde des signaux dans deux bandes de longueurs d'onde ;
- la figure 4 est une vue schématique de moyens d'analyse d'un dispositif de réception du terminal de la figure 1 ;
- la figure 5 est une vue schématique d'une variante des moyens d'analyse de la figure 4 ;
- la figure 6 est une vue schématique d'un dispositif de détermination du seuil d'apparition d'un effet de Brillouin ;
- la figure 7 est un graphique représentant l'évolution de la puissance transmise d'un signal optique continu dans une fibre optique du dispositif de la figure 6 et l'évolution de la puissance rétro-diffusé de ce signal optique dans la fibre en fonction de la puissance initiale du signal optique ;
- la figure 8 est un graphique représentant l'évolution d'une longueur de fibre en fonction d'une puissance d'un signal de rétro-diffusion de Brillouin.

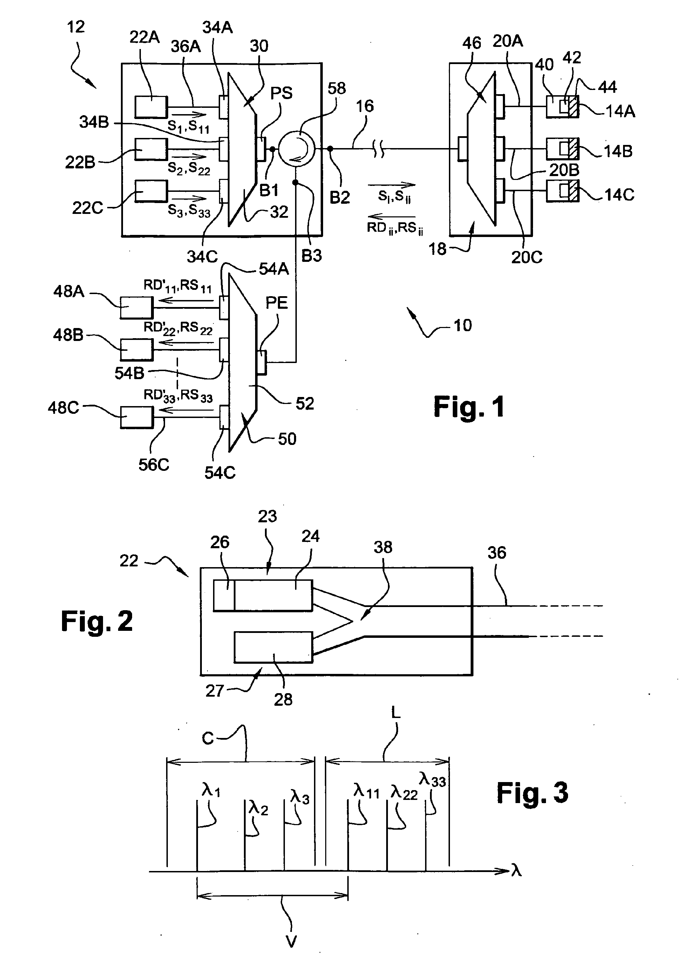

On a représenté sur la figure 1 une installation de réseau optique de télécommunication selon l'invention. Cette installation est désignée par la référence générale 10.

L'installation 10 comprend un terminal central 12 et au moins un terminal client 14. Sur la figure 1, on a représenté trois terminaux clients 14A, 14B et 14C.

L'installation 10 comprend également des moyens de transmission optique comprenant, par exemple, une fibre optique principale 16, pour la transmission de données entre le terminal central 12 et les terminaux clients 14.

En général, l'installation optique 10 comprend également un noeud d'accès client 18 destiné à relier les terminaux clients 14 à la fibre optique principale 16. Les terminaux clients 14A, 14B, 14C sont reliés respectivement au noeud d'accès 18 par l'intermédiaire de fibres optiques secondaires 20A, 20B, 20C.

Le terminal central 12 comprend au moins un dispositif 22 de génération de signaux optiques descendants. Dans cet exemple, le terminal central 12 comprend trois dispositifs de génération 22A, 22B, 22C.

Les dispositifs de génération 22A, 22B, 22C comprennent respectivement des moyens 23A, 23B, 23C pour générer respectivement des signaux optiques descendants modulés S₁, S₂, S₃ de longueur d'onde respectives λ₁, λ₂, λ₃ pour la transmission de données vers les terminaux clients 14A, 14B, 14C correspondants.

A cet effet, chacun des moyens de génération 23 comprend une première source optique 24 de longueur d'onde d'émission λᵢ et des moyens de modulation 26 de la première source 24 (figure 2).

Les premières sources optiques 24A, 24B, 24C (non représentées sur les figures) respectivement des moyens de génération 23A, 23B, 23C ont des longueurs d'ondes d'émission λ₁, λ₂, λ₃ distinctes.

Les longueurs d'ondes λ₁, λ₂, λ₃ sont par exemple comprises dans une première bande de longueur d'onde s'étendant de 1525 nm à 1565 nm, désignée généralement par « bande C » (figure 3).

Par ailleurs, chaque dispositif de génération 22 comprend également des moyens 27 pour générer, en plus du signal optique modulé Sᵢ de longueur d'onde λᵢ, un signal optique continu descendant Sᵢᵢ de longueur d'onde λᵢᵢ.

Les moyens de génération 27A, 27B, 27C sont ainsi destinés à générer respectivement des signaux optiques continus descendants S₁₁, S₂₂, S₃₃ de longueur d'onde respectives λ₁₁, λ₂₂, λ₃₃ transmis vers les terminaux clients 14A, 14B, 14C correspondants.

A cet effet, chacun des moyens de génération 27 comprend également une deuxième source optique 28 d'émission de longueur d'onde λᵢᵢ.

Les deuxièmes sources optiques 28A, 28B, 28C (non représentées sur les figures) respectivement des moyens de génération 27A, 27B, 27C ont des longueurs d'ondes d'émission λ₁₁, λ₂₂, λ₃₃ distinctes.

Les longueurs d'ondes λ₁₁, λ₂₂, λ₃₃ sont par exemple comprises dans une bande de longueur d'onde s'étendant de 1570 nm à 1610 nm, désignée généralement par « bande L » (figure 3).

Les sources optiques 24 et 28 comprennent des diodes lasers et sont par exemple regroupées dans une barrette de diodes lasers classique (non représentée).

Afin d'insérer les signaux optiques descendants Sᵢ et Sᵢᵢ générés par chaque dispositif de génération 22 dans la fibre optique principale 16, le terminal central 12 comprend également un dispositif 30 d'insertion des signaux optiques.

Dans cet exemple, le terminal central 12 comprend un multiplexeur en longueur d'onde 32 de signaux optiques formant un dispositif d'insertion 30 commun aux trois dispositifs de génération 22A, 22B, 22C.

Le multiplexeur de signaux optiques 32 comprend au moins des premier 34A, deuxième 34B et troisième 34C ports d'entrée raccordés respectivement aux premier 22A, deuxième 22B et troisième 22C dispositifs de génération de signaux optiques, respectivement par des fibres optiques secondaires 36A, 36B, 36C.

Le multiplexeur 32 comprend encore de façon classique un port de sortie PS des signaux S₁, S₂, S₃ multiplexés, raccordé à la fibre optique principale 16.

Dans cet exemple, le multiplexeur 32 est du type à port d'entrée commun aux moyens de génération 23 du signal optique continu et aux moyens de génération 27 du signal optique modulé.

Ainsi, le multiplexeur 32 a des paramètres géométriques choisis de telle sorte que le multiplexeur 32 est dit cyclique. Plus précisément, à intervalle régulier V de longueur d'onde (figure 3), la répartition des longueurs d'onde dans les ports d'entrée 34 est identique. Cet intervalle V est désigné couramment par intervalle spectral libre du multiplexeur.

Par exemple, comme on le voit sur la figure 3, les longueurs d'onde λ₁ et λ₁₁ des signaux S₁ et S₁₁ sont distantes d'un intervalle V. Par conséquent, les signaux S₁et S₁₁ sont introduits dans le même port d'entrée 34A. De façon analogue, les signaux S₂ et S₂₂ et S₃ et S₃₃ sont introduits respectivement dans les mêmes ports d'entrée respectifs 34B et 34C.

En outre, les première 24 et deuxième 28 sources optiques sont par exemple couplées entre elles par des moyens 38 de couplage classiques de signaux optiques pour leur insertion dans la fibre optique secondaire correspondante 36. Les moyens de couplage 38 comprennent par exemple un coupleur à 3dB classique (figure 2).

Conformément à l'invention, la puissance initiale (puissance en sortie de la source optique 28) du signal optique continu Sᵢᵢ est supérieure à un seuil de puissance d'apparition d'un effet Brillouin stimulé, seuil au-dessus duquel le signal optique continu Sᵢᵢ induit un signal optique continu RD'ᵢᵢ de rétro-diffusion de Brillouin montant de longueur d'onde λ^{'}ᵢᵢ.

Généralement, la longueur d'onde λ^{'}ᵢᵢ du signal de rétro-diffusion de Brillouin RD'ᵢᵢ est supérieure à la longueur d'onde du signal optique continu Sᵢᵢ. Par exemple, si la longueur d'onde λᵢᵢ a une valeur de 1550 nm, la longueur d'onde λ^{'}ᵢᵢ a une valeur de 1550,088 nm.

Les signaux optiques descendants Sᵢᵢ et Sᵢ sont transmis du terminal central 12 vers les terminaux clients 14 dans la fibre optique principale 16.

Par ailleurs, afin de transmettre des données d'un terminal client 14 vers le terminal central 12, chaque terminal client 14 comprend un dispositif 40 de création d'un signal optique RSᵢᵢ montant modulé de longueur d'onde λᵢᵢ à partir du signal optique Sᵢᵢ continu descendant de longueur d'onde λᵢᵢ.

De préférence, chaque dispositif de création 40 comprend des moyens 42 de modulation et des moyens 44 de réflexion du signal optique continu Sᵢᵢ descendant de longueur d'onde λᵢᵢ, généré par le terminal central 12.

Eventuellement, les moyens de réflexion 44 sont également destinés à amplifier le signal optique RSᵢᵢ montant modulé de longueur d'onde λᵢᵢ.

Dans l'exemple illustré et de façon classique, le noeud d'accès 18 comprend un multiplexeur-démultiplexeur en longueur d'onde 46 de signaux optiques destiné à répartir les signaux descendants Sᵢᵢ et Sᵢ dans les fibres optiques secondaires 20 reliés aux terminaux clients 14 et à multiplexer en longueur d'onde les signaux optiques montants RD'ᵢᵢ, RSᵢᵢ pour la transmission des signaux optiques montants dans la fibre optique 16.

Afin de recevoir les signaux optiques montants RD'ᵢᵢ, RSᵢᵢ, le terminal central 12 comprend également au moins un dispositif 48 de réception de signaux optiques montants. Dans l'exemple illustré sur la figure 1, le terminal central 12 comprend trois dispositifs de réception 48A, 48B, 48C de signaux optiques montants.

De préférence, afin d'extraire les signaux optiques montants de la fibre optique principale 16, le terminal central 12 comprend également un dispositif 50 d'extraction de signaux montants.

Dans cet exemple, le terminal central 12 comprend un démultiplexeur 52 en longueur d'onde de signaux optiques formant un dispositif d'extraction 50 commun aux trois dispositifs de réception 48A, 48B, 48C.

Le démultiplexeur 52 comprend au moins des premier 54A, deuxième 54B et troisième 54C ports de sortie raccordés respectivement aux premier 48A, deuxième 48B et troisième 48C dispositifs de réception de signaux optiques, respectivement par des fibres optiques secondaires 56A, 56B, 56C.

Le démultiplexeur 52 comprend encore un port d'entrée PE des signaux optiques montants multiplexés dans la fibre optique 16 et est destiné à répartir les signaux optiques montants dans les ports de sorties 54 en fonction des longueurs d'onde des signaux.

Ainsi, le démultiplexeur 52 a des paramètres géométriques identiques à ceux du multiplexeur 32 et est également cyclique. Comme la différence de longueur d'onde entre les longueurs d'onde λᵢᵢ et λ^{'}ᵢᵢ est relativement faible (moins de 0,1 nm), les signaux RD'ᵢᵢ et RSᵢᵢ sont dirigés vers le même port de sortie 46.

Les signaux optiques montants sont donc répartis dans les ports de sortie 54 comme suit :
- les signaux RD'₁₁ et RS₁₁ sont dirigés vers le même port de sortie 54A,
- les signaux RD'₂₂ et S₂₂ sont dirigés vers le même port de sortie 54B,
- les signaux RD'₃₃ et S₃₃ sont dirigés vers le même port de sortie 54C.

Comme on le voit sur la figure 1, le multiplexeur 32 et le démultiplexeur 52 sont raccordés à la fibre optique principale 16 par un circulateur 58.

Un circulateur est de façon connue en soi, un composant optique comprenant un ou plusieurs isolateurs optiques (non représentés).

De façon classique, le circulateur 58 comporte trois bornes. Une première borne est reliée au port de sortie PS du multiplexeur 32, une deuxième borne à un port d'entrée PE du démultiplexeur 52, et une troisième borne B3 à la fibre optique principale 16.

Ce circulateur 58 est disposé dans l'installation 10 de telle sorte que :
- un signal optique montant dans la fibre 16 est transmis de la borne B2 à la borne B3 dans le port d'entrée PE du démultiplexeur 52,
- un signal optique descendant provenant du port de sortie PS du multiplexeur 32 est transmis de la borne B1 à la borne B2 dans la fibre optique principale 16,
- aucun signal n'est transmis de la borne B1 à la borne B3.

En variante, le multiplexeur 32 et le démultiplexeur 52 forme un dispositif unique permettant simultanément l'insertion et l'extraction de signaux optiques descendants ou montants.

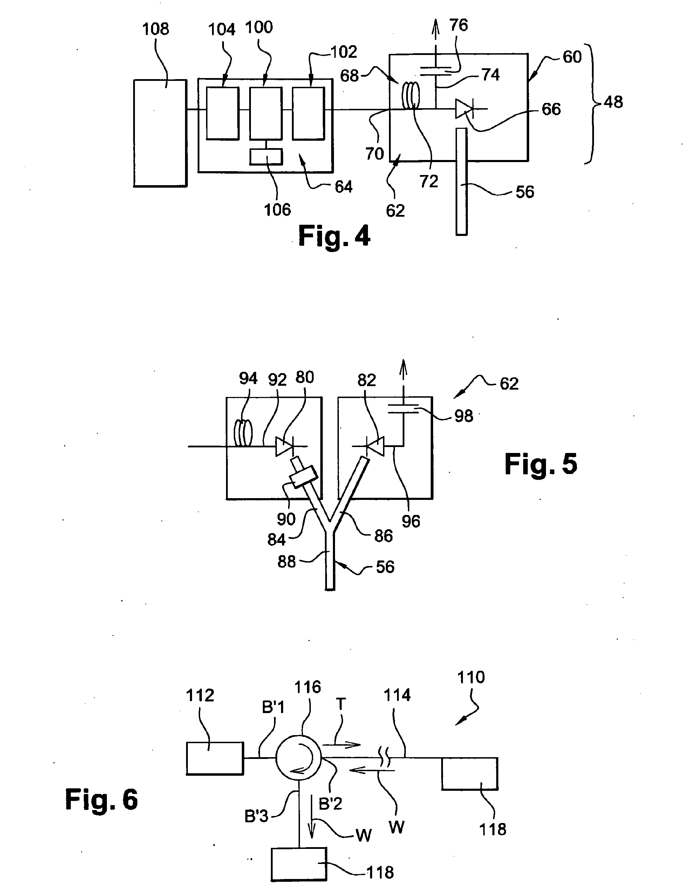

Chaque dispositif de réception 48 comprend des moyens 60 d'analyse du signal de rétro-diffusion de Brillouin RD'ᵢᵢ (figure 4).

Dans cet exemple, les moyens d'analyse 60 comprennent une unité 62 de détection d'au moins le signal optique de rétro-diffusion de Brillouin, comprenant au moins un détecteur optique 66 destiné à convertir le signal optique en un signal électrique.

Les moyens d'analyse 60 comprennent encore une unité 64 de traitement de ce signal électrique.

Comme illustré sur la figure 4, l'unité de détection 62 comprend un unique détecteur optique 66, par exemple une photodiode. Dans ce cas, la fibre optique secondaire 56 de raccordement du port de sortie 54 au dispositif de réception 48 correspondant comprend une unique branche de transmission optique raccordée au port de sortie 54 et au détecteur optique 66.

Par ailleurs, l'unité de détection 62 comprend un circuit électrique 68 comprenant au moins une première branche 70 de transmission électrique d'un signal continu, notamment le signal RD'ᵢᵢ raccordée électriquement au détecteur optique 62 et à l'unité de traitement du signal électrique 64.

Afin de supprimer le signal modulé montant RSᵢᵢ, cette première branche 70 est munie d'un filtre électrique passe-bas 72.

Eventuellement, le circuit électrique 68 comprend une deuxième branche 74 de transmission électrique d'un signal modulé, notamment du signal RSᵢᵢ, raccordée électriquement au détecteur optique 62 et à des moyens de démodulation (non représentés) du signal modulé du dispositif de réception 48.

Afin de supprimer le signal continu détecté par la photodiode 56, cette deuxième branche 74 est munie d'un filtre électrique passe-haut 76.

Dans une variante illustrée sur la figure 5, l'unité de détection 62 comprend des premier 80 et deuxième 82 détecteurs optiques.

Dans ce cas, la fibre optique secondaire 56 de raccordement du port de sortie 54 au dispositif de réception 48 correspondant comprend des première 84 et deuxième 86 branches de transmission optique secondaires reliées respectivement aux premier 80 et deuxième 84 détecteurs optiques et à une branche 88 de transmission optique principale raccordée au port de sortie 54.

Par exemple, les première et deuxième branches de transmission optique 84 et 86 sont raccordées entre elles et à la branche principale 88 par un coupleur à 3 dB classique (abréviation pour décibel).

De préférence, afin de supprimer le signal optique modulé RSᵢᵢ dans la première branche de transmission optique secondaire 84, la première branche de transmission optique secondaire 84 est munie d'un filtre optique passe-bande 90 centrée sur la longueur d'onde du signal de rétro-diffusion de Brillouin RD'ᵢᵢ de longueur d'onde λ^{'}ᵢᵢ.

Dans cet exemple, l'unité de détection 62 comprend une première branche 92 de transmission électrique d'un signal continu munie d'un filtre électrique 94 passe-bas, raccordée électriquement au premier détecteur optique 80 et à l'unité de traitement du signal 64.

L'unité de détection 62 comprend encore une deuxième branche 96 de transmission électrique d'un signal modulé munie d'un filtre électrique 98 passe-haut, raccordée électriquement au premier détecteur optique 80 et aux moyens de démodulation du signal modulé du dispositif de réception 48.

Dans l'exemple décrit, l'unité de traitement du signal électrique 64 comprend des moyens de mesure 100 d'une valeur de la puissance de ce signal électrique. De façon classique, l'unité de traitement du signal électrique 64 comprend des moyens de conversion analogique numérique 102 et des moyens 104 de conversion numérique analogique des signaux électriques.

Par ailleurs, l'unité 64 comprend également des moyens 106 de détermination d'une valeur de longueur de fibre en fonction de la valeur de la puissance mesurée du signal RD'ᵢᵢ.

Par exemple, les moyens de détermination 106 comprennent des moyens de mémorisation (non représentés) d'une table de correspondance entre un ensemble de valeurs de longueur de fibre et un ensemble de valeurs de puissance et des moyens de comparaison de la valeur de la puissance mesurée avec les valeurs de puissance de la table de correspondance.

Eventuellement, les moyens d'analyse 60 comprennent encore une unité d'affichage 108 d'un résultat correspondant, par exemple, à une longueur de fibre en km.

On décrira ci-dessous, certains aspects du fonctionnement du procédé de détection d'une coupure d'une fibre optique de l'installation optique 10.

De préférence, avant de mettre en oeuvre le procédé de détection d'une coupure selon l'invention, on détermine la valeur du seuil d'apparition d'un effet Brillouin stimulé. Cette valeur est, dans cet exemple, déterminée pour une longueur de fibre totale entre le port de sortie PS du multiplexeur 32 du terminal central 12 et chaque terminal client 14 de longueur 20 km.

La valeur du seuil d'apparition d'un effet Brillouin stimulé est par exemple déterminée expérimentalement à l'aide d'un dispositif 110 de détermination de la valeur du seuil, représenté sur la figure 6.

Ce dispositif 110 comprend une source optique du type laser 112 raccordée à une fibre optique 114 de longueur 20 km par l'intermédiaire d'un circulateur 116 de fonctionnement identique au circulateur 58 décrit ci-dessus. La source optique 112 est destinée à émettre un signal optique T descendant.

La borne B'1 du circulateur 116 est reliée à la source optique laser 112, la borne B'2 est reliée à une extrémité de la fibre optique 114 et la borne B'3 est reliée à un puissance-mètre 118 classique destiné à déterminer la puissance des signaux optiques rétro-diffusés.

L'autre extrémité de la fibre optique 114 est également reliée à un puissance-mètre 118 destiné à déterminer la puissance des signaux optiques transmis.

On effectue des mesures des puissances transmises du signal optique T et d'un signal rétro-diffusé de Brillouin W pour différentes valeurs de la puissance initiale du signal continu T émis par la source optique.

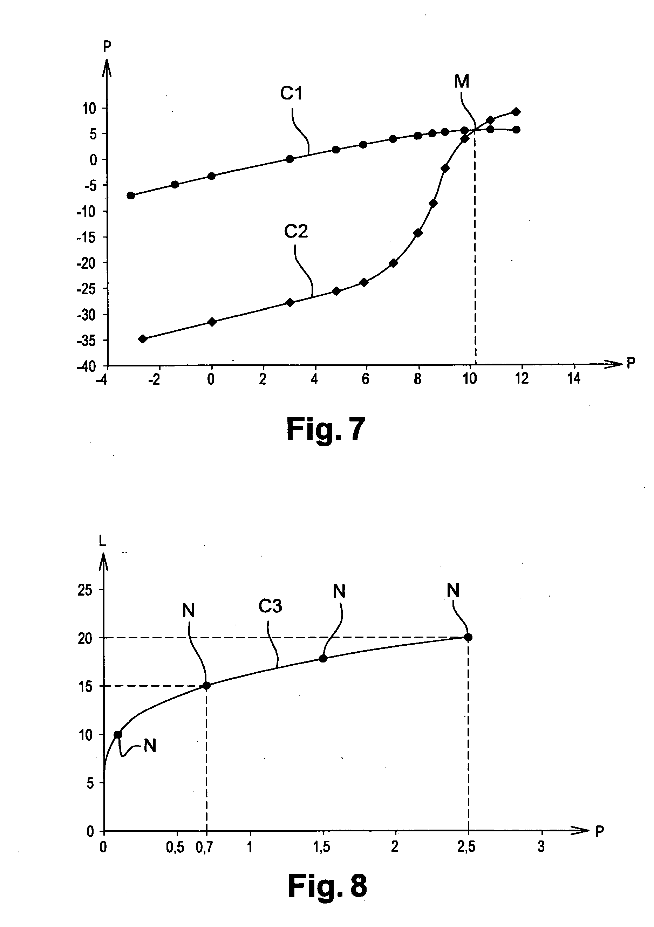

On obtient alors le graphique de la figure 7. Les courbes C1 et C2 représentent respectivement l'évolution des puissances P transmises du signal optique continu T et du signal rétro-diffusé de Brillouin W en fonction de la puissance P initiale du signal optique T émis par la source optique 110. Les puissances sont exprimées en dBm (dBm est une abréviation pour décibelmètre. De façon classique, le décibelmètre est une unité de mesure de puissance : X_{dBm}= 10log₁₀(X_{mW}/X₀) où X₀=1 mW, X_{mW} est une puissance X exprimée en milliwatt et X_{dBm} est la puissance X exprimée en dBm).

On constate alors que sur le graphique de la figure 7, à partir d'une puissance injectée de 6 dBm, la courbe C2 est représentative d'une fonction non-linéaire, correspondant alors au phénomène optique non-linéaire d'un effet Brillouin stimulé. En-dessous de 6 dBm, la courbe C2 est représentative d'une fonction sensiblement linéaire, correspondant au phénomène de rétro-diffusion de Rayleigh.

De préférence, on choisira comme seuil de puissance d'apparition du phénomène de Brillouin, la puissance initiale du signal émis par la source optique 110 correspondant à l'abscisse du point d'intersection M des deux courbes C1 et C2.

On choisit donc, pour la suite de la description, une valeur de la puissance initiale du signal optique continu descendant supérieure à une valeur de 10 dBm.

On considère, dans cet exemple, que la fibre optique secondaire 20A reliant le terminal client 14A au point d'accès 18 présente une coupure X localisée à une longueur de fibre de 15 km du port de sortie PS du multiplexeur 32 du terminal central 12. La longueur de fibre totale entre ce port de sortie PS et le terminal client 14A est par exemple de 20 km.

Au cours du fonctionnement de l'installation optique 10, chaque dispositif de génération 22 du terminal central 12 génère un signal optique modulé Sᵢ, porteur de données de longueur d'onde λᵢ, pour la transmission de données et un signal optique descendant continu de longueur d'onde λᵢᵢ pour la détection de coupure vers son terminal client 14 correspondant.

Conformément à l'invention, le signal optique continu Sᵢᵢ descendant de longueur d'onde λᵢᵢ a une puissance initiale supérieure au seuil de puissance d'apparition d'un effet Brillouin stimulé déterminée précédemment à l'aide du dispositif de détermination du seuil 110, au-dessus duquel le signal optique continu Sᵢᵢ descendant induit un signal optique de rétro-diffusion de Brillouin montant de longueur d'onde λᵢ.

Chaque terminal client 14 reçoit les signaux descendants et crée à partir du signal optique descendant continu de longueur d'onde λᵢᵢ, un signal optique montant modulé RSᵢᵢ de longueur d'onde λᵢᵢ afin de transmettre des données vers le terminal central 12.

Afin de créer un signal montant RSᵢᵢ porteur de données, de préférence, chaque terminal client 14 module et réfléchit le signal continu descendant Sᵢᵢ.

Comme la fibre optique secondaire 20A présente une coupure X, le dispositif de réception 48A du terminal central 12 correspondant au terminal client 14A ne reçoit plus de signaux optiques modulés montants RS₁₁ porteurs de données émis par le terminal client 14A. En revanche, le dispositif de réception 48A reçoit toujours le signal optique montant continu de rétro-diffusion de Brillouin RD'₁₁.

Conformément au procédé de détection selon l'invention, afin de détecter la coupure, le dispositif de réception 48A du terminal central 12 analyse la puissance du signal optique de rétro-diffusion de Brillouin RD'₁₁.

De préférence, dans l'étape d'analyse, le dispositif de réception 48A compare la puissance du signal optique de rétro-diffusion de Brillouin RD'ᵢᵢ avec la table de correspondance entre un premier ensemble de valeurs de longueur de fibres, et un deuxième ensemble de valeurs de puissance.

Par exemple, la table de correspondance est établie au préalable expérimentalement, en relevant la puissance d'un signal de rétro-diffusion de Brillouin pour différentes longueurs de fibre.

Ainsi, sur le graphique de la figure 8, on a représenté la courbe C3 représentant l'évolution de la longueur L de fibre en km en fonction de la puissance P du signal de rétro-diffusion de Brillouin en milliwatt. Le premier ensemble de valeurs de longueur de fibre et le deuxième ensemble de valeurs de puissance sont respectivement les ordonnées et les abscisses des points N de la courbe C3.

Pour une longueur de fibre de 20 km, la valeur de la puissance du signal de rétro-diffusion de Brillouin doit avoir une valeur de 2,5 milliwatt.

Or, du fait de la coupure X de la fibre secondaire 20A localisée à 15 km du terminal central 12, le signal RD'₁₁ a une puissance mesurée plus faible, de valeur 0,7 milliwatt.

Les moyens de comparaison comparent alors cette valeur de puissance mesurée avec une valeur de la puissance du deuxième ensemble et détermine alors la valeur de la longueur de fibre correspondante dans la table.

Dans l'exemple décrit, la longueur de fibre correspondante a une valeur de 15 km.

En variante, on détermine, par le calcul la longueur L de fibre optique coupée, grâce à une équation mathématique décrivant le phénomène physique d'un effet Brillouin stimulé. Cette équation mathématique peut également être mémorisée dans les moyens de mémorisation.

Le dispositif de réception 48A affiche alors le résultat, par exemple la valeur de la longueur L de fibre coupée, dans cet exemple, 15 km.

## Revendications

1. Terminal (12) de réseau optique de télécommunication, du type comprenant :
- au moins un dispositif (22) de génération de signaux optiques descendants, et
- au moins un dispositif (48) de réception de signaux optiques montants,
les signaux optiques étant destinés à circuler dans des moyens (16, 20) de transmission optique reliés au terminal (12),
le dispositif de génération (22) comprenant des moyens (23) pour générer un signal optique continu descendant dans les moyens de transmission optique (16, 20) de longueur d'onde λᵢᵢ de puissance initiale supérieure à un seuil de puissance d'apparition d'un effet Brillouin stimulé, seuil au-dessus duquel ledit signal optique continu induit un signal optique continu de rétro-diffusion de Brillouin montant dans les moyens de transmission optique (16, 20) de longueur d'onde λ'ᵢᵢ, **caractérisé en ce que** le dispositif de réception (48) de signaux optiques comprend des moyens d'analyse (60) de la puissance dudit signal optique continu de rétro-diffusion de Brillouin de longueur d'onde λ'ᵢᵢ.

2. Terminal (12) selon la revendication 1, dans lequel le dispositif de génération (22) comprend également des moyens (27) pour générer un signal optique modulé descendant dans les moyens de transmission optique (16, 20) de longueur d'onde λᵢ pour la transmission de données.

3. Terminal (12) selon la revendication 1 ou 2, dans lequel les moyens de transmission optique (16, 20) comprenant au moins une fibre optique, les moyens d'analyse (60) comprennent des moyens (100) de mesure d'une valeur de la puissance du signal de rétro-diffusion de Brillouin et des moyens (106) de détermination d'une valeur de longueur de fibre optique en fonction de la valeur de la puissance du signal mesurée.

4. Terminal (12) selon la revendication 3, dans lequel les moyens de détermination (106) comprennent des moyens de mémorisation d'une table de correspondance entre un ensemble de valeurs de longueur de fibre et un ensemble de valeurs de puissance et des moyens de comparaison de la valeur de la puissance mesurée avec les valeurs de puissance de la table de correspondance.

5. Terminal (12) selon la revendication 3 ou 4, dans lequel les moyens d'analyse (60) comprennent :
- une unité (62) de détection d'au moins le signal optique de rétro-diffusion de Brillouin, comprenant au moins un détecteur (66) destiné à convertir le signal optique en un signal électrique, et
- une unité (64) de traitement de ce signal électrique comprenant les moyens de mesure (100) et les moyens de détermination (106) d'une valeur de longueur de fibre optique.

6. Terminal (12) selon la revendication 5, dans lequel l'unité de détection (62) comprend au moins un détecteur (66) et au moins un circuit électrique (68) comprenant au moins une première branche (70) de transmission électrique d'un signal continu munie d'un filtre passe-bas (72), raccordée électriquement au détecteur optique (66) et à l'unité de traitement du signal électrique (64).

7. Terminal (12) selon la revendication 6, dans lequel le circuit électrique (68) comprend une deuxième branche (74) de transmission électrique d'un signal modulé munie d'un filtre passe-haut (76), raccordée électriquement au détecteur optique (66) et à des moyens de démodulation du signal modulé du dispositif de réception (48).

8. Terminal (12) selon la revendication 5, dans lequel l'unité de détection (62) comprend au moins des premier (80) et deuxième (82) détecteurs optiques reliés respectivement à des première (84) et deuxième (86) branches de transmission optique, la première branche de transmission optique (84) étant munie d'un filtre optique passe-bande (90) centré sur la longueur d'onde du signal de rétro-diffusion de Brillouin de longueur d'onde λ'ᵢᵢ.

9. Terminal (12) selon la revendication 8, dans lequel l'unité de détection (62) comprend :
- une première branche (92) de transmission électrique d'un signal continu munie d'un filtre électrique passe-bas (94), raccordée électriquement au premier détecteur optique (80) et à l'unité de traitement du signal (64), et
- une deuxième branche (96) de transmission électrique d'un signal modulé munie d'un filtre électrique passe-haut (98), raccordée électriquement au deuxième détecteur optique (82) et à des moyens de démodulation du signal modulé du dispositif de réception (48).

10. Installation (10) de réseau optique de télécommunication comprenant un terminal central (12) relié à au moins un terminal client (14) par l'intermédiaire de moyens de transmission optique (16, 20), **caractérisé en ce que** le terminal central (12) est un terminal selon l'une quelconque des revendications 1 à 9.

11. Procédé de détection d'une coupure dans des moyens de transmission optique (16, 20) reliant un terminal central (12) et au moins un terminal client (14) d'un réseau de télécommunication optique, comprenant les étapes suivantes :
- de génération, par le terminal central (12), d'un signal optique descendant continu de longueur d'onde λᵢᵢ,
- de transmission de ce signal vers le terminal client (14) dans des moyens de transmission optique (16, 20, 36),
le signal optique continu descendant de longueur d'onde λᵢᵢ ayant une puissance initiale supérieure à un seuil d'apparition d'un effet Brillouin stimulé, seuil 5 au-dessus duquel le signal optique continu induit un signal optique de rétro-diffusion de Brillouin montant de longueur d'onde λ'ᵢᵢ, **caractérisé en ce qu'**il comprend une étape d'analyse de la puissance du signal optique de rétro-diffusion de Brillouin de longueur d'onde λ'ᵢᵢ, par le terminal central (12).

## Claims

1. Telecommunications optical network terminal (12) of the type comprising:
- at least one device (22) for generating downlink optical signals, and
- at least one device (48) for receiving uplink optical signals,
the optical signals being designed to travel in optical transmission means (16, 20) connected to the terminal (12), the generation device (22) comprising means (23) for generating a continuous downlink optical signal in the optical transmission means (16, 20) of wavelength λᵢᵢ of initial power higher than a power threshold of appearance of a stimulated Brillouin effect, the threshold above which said continuous optical signal induces an uplink Brillouin backscatter continuous optical signal in the optical transmission means (16, 20) of wavelength λ'ᵢᵢ, **characterized in that** the device (48) for receiving optical signals comprises means (60) for analysing the power of said Brillouin backscatter continuous optical signal of wavelength λ'ᵢᵢ.

2. Terminal (12) according to Claim 1, in which the generation device (22) also comprises means (27) for generating a downlink modulated optical signal in the optical transmission means (16, 20) of wavelength λᵢ for the transmission of data.

3. Terminal (12) according to Claim 1 or 2, in which the optical transmission means (16, 20) comprising at least one optical fibre, the analysis means (60) comprise means (100) for measuring a value of the power of the Brillouin backscatter signal and means (106) for determining a value of optical fibre length as a function of the measured value of the signal power.

4. Terminal (12) according to Claim 3, in which the determination means (106) comprise means for storing a mapping table for mapping between a set of fibre-length values and a set of power values and means for comparing the measured power value with the power values of the mapping table.

5. Terminal (12) according to Claim 3 or 4, in which the analysis means (60) comprise:
- a unit (62) for detecting at least one Brillouin backscatter optical signal, comprising at least one detector (66) designed to convert the optical signal into an electrical signal, and
- a unit (64) for processing this electrical signal comprising the means (100) for measuring and the means (106) for determining a value of optical fibre length.

6. Terminal (12) according to Claim 5, in which the detection unit (62) comprises at least one detector (66) and at least one electrical circuit (68) comprising at least one first branch (70) for the electrical transmission of a continuous signal furnished with a low-pass filter (72), electrically connected to the optical detector (66) and to the electrical signal processing unit (64).

7. Terminal (12) according to Claim 6, in which the electrical circuit (68) comprises a second branch (74) for the electrical transmission of a modulated signal furnished with a high-pass filter (76), electrically connected to the optical detector (66) and to means for demodulating the modulated signal of the receiving device (48).

8. Terminal (12) according to Claim 5, in which the detection unit (62) comprises at least a first optical detector (80) and a second optical detector (82) which are connected respectively to a first optical transmission branch (84) and a second optical transmission branch (86), the first optical transmission branch (84) being furnished with a bandpass optical filter (90) centred on the wavelength of the Brillouin backscatter signal of wavelength λ'ᵢᵢ.

9. Terminal (12) according to Claim 8, in which the detection unit (62) comprises:
- a first branch (92) for the electrical transmission of a continuous signal furnished with a low-pass electrical filter (94), electrically connected to the first optical detector (80) and to the signal-processing unit (64), and
- a second branch (96) for the electrical transmission of a modulated signal furnished with a high-pass electrical filter (98), electrically connected to the second optical detector (82) and to means for demodulating the modulated signal of the receiving device (48).

10. Telecommunications optical network installation (10) comprising a central terminal (12) connected to at least one client terminal (14) via optical transmission means (16, 20), **characterized in that** the central terminal (12) is a terminal according to any one of Claims 1 to 9.

11. Method for detecting a cut-off in optical transmission means (16, 20) connecting a central terminal (12) and at least one client terminal (14) of an optical telecommunications network, comprising the following steps:
- of generating, by the central terminal (12), a continuous downlink optical signal of wavelength λᵢᵢ,
- of transmitting this signal to the client terminal (14) in optical transmission means (16, 20, 36),
the downlink continuous optical signal of wavelength λᵢᵢ having an initial power higher than a threshold of appearance of a stimulated Brillouin effect, the threshold above which the continuous optical signal induces an uplink Brillouin backscatter optical signal of wavelength λ'ᵢᵢ, **characterized in that** it comprises a step of analysing the power of the Brillouin backscatter optical signal of wavelength λ'ᵢᵢ by the central terminal (12).

## Patentansprüche

1. Endgerät (12) eines optischen Telekommunikationsnetzwerks von der Art, die enthält:
- mindestens eine Vorrichtung (22) zur Erzeugung optischer Abwärtssignale, und
- mindestens eine Vorrichtung (48) zum Empfang optischer Aufwärtssignale,
wobei die optischen Signale dazu bestimmt sind, in Einrichtungen (16, 20) zur optischen Übertragung zu zirkulieren, die mit dem Endgerät (12) verbunden sind,
wobei die Erzeugungsvorrichtung (22) Einrichtungen (23) enthält, um in den optischen Übertragungseinrichtungen (16, 20) ein kontinuierliches optisches Abwärtssignal der Wellenlänge λᵢᵢ zu erzeugen, dessen Anfangsleistung höher als ein Leistungsschwellwert des Auftretens eines stimulierten Brillouin-Effekts ist, Schwellwert, oberhalb dessen das kontinuierliche optische Signal in den optischen Übertragungseinrichtungen (16, 20) ein kontinuierliches optisches Aufwärtssignal einer Brillouin-Rückstreuung der Wellenlänge λ'ᵢᵢ induziert, **dadurch gekennzeichnet, dass** die Vorrichtung (48) zum Empfang optischer Signale Analyseeinrichtungen (60) der Leistung des kontinuierlichen optischen Brillouin-Rückstreuungssignals der Wellenlänge λ'ᵢᵢ enthält.

2. Endgerät (12) nach Anspruch 1, bei dem die Erzeugungsvorrichtung (22) ebenfalls Einrichtungen (27) enthält, um in den optischen Übertragungseinrichtungen (16, 20) ein moduliertes optisches Abwärtssignal der Wellenlänge λᵢ für die Datenübertragung zu erzeugen.

3. Endgerät (12) nach Anspruch 1 oder 2, bei dem, wenn die optischen Übertragungseinrichtungen (16, 20) mindestens eine Lichtleitfaser enthalten, die Analyseeinrichtungen (60) Einrichtungen (100) zur Messung eines Werts der Leistung des Brillouin-Rückstreuungssignals und Einrichtungen (106) zur Bestimmung eines Werts einer Lichtleitfaserlänge abhängig vom gemessenen Wert der Leistung des Signals enthalten.

4. Endgerät (12) nach Anspruch 3, bei dem die Bestimmungseinrichtungen (106) Speichereinrichtungen einer Entsprechungstabelle zwischen einer Einheit von Faserlängenwerten und einer Einheit von Leistungswerten und Vergleichseinrichtungen des gemessenen Leistungswerts mit den Leistungswerten der Entsprechungstabelle enthalten.

5. Endgerät (12) nach Anspruch 3 oder 4, bei dem die Analyseeinrichtungen (60) enthalten:
- eine Erfassungseinheit (62) mindestens des optischen Brillouin-Rückstreuungssignals, die mindestens einen Detektor (66) enthält, der dazu bestimmt ist, das optische Signal in ein elektrisches Signal umzuwandeln, und
- eine Verarbeitungseinheit (64) dieses elektrischen Signals, die die Messeinrichtungen (100) und die Bestimmungseinrichtungen (106) eines Lichtleitfaser-Längenwerts enthält.

6. Endgerät (12) nach Anspruch 5, bei dem die Erfassungseinheit (62) mindestens einen Detektor (66) und mindestens einen elektrischen Schaltkreis (68) enthält, der mindestens einen ersten Zweig (70) zur elektrischen Übertragung eines kontinuierlichen Signals enthält, der mit einem Tiefpassfilter (72) versehen und elektrisch an den optischen Detektor (66) und an die Verarbeitungseinheit des elektrischen Signals (64) angeschlossen ist.

7. Endgerät (12) nach Anspruch 6, bei dem der elektrische Schaltkreis (68) einen zweiten Zweig (74) zur elektrischen Übertragung eines modulierten Signals enthält, der mit einem Hochpassfilter (76) versehen und elektrisch an den optischen Detektor (66) und an Demodulationseinrichtungen des modulierten Signals der Empfangsvorrichtung (48) angeschlossen ist.

8. Endgerät (12) nach Anspruch 5, bei dem die Erfassungseinheit (62) mindestens erste (80) und zweite (82) optische Detektoren enthält, die mit einem ersten (84) bzw. zweiten (86) optischen Übertragungszweig verbunden sind, wobei der erste optische Übertragungszweig (84) mit einem optischen Bandpassfilter (90) versehen ist, das auf die Wellenlänge des Brillouin-Rückstreuungssignals der Wellenlänge λ'ᵢᵢ zentriert ist.

9. Endgerät (12) nach Anspruch 8, bei dem die Erfassungseinheit (62) enthält:
- einen ersten Zweig (92) zur elektrischen Übertragung eines kontinuierlichen Signals, der mit einem elektrischen Tiefpassfilter (94) versehen und elektrisch an den ersten optischen Detektor (80) und an die Verarbeitungseinheit des Signals (64) angeschlossen ist, und
- einen zweiten Zweig (96) zur elektrischen Übertragung eines modulierten Signals, der mit einem elektrischen Hochpassfilter (98) versehen und elektrisch an den zweiten optischen Detektor (82) und an Demodulationseinrichtungen des modulierten Signals der Empfangsvorrichtung (48) angeschlossen ist.

10. Anlage (10) eines optischen Telekommunikationsnetzwerks, die ein zentrales Endgerät (12) enthält, das mit Hilfe von optischen Übertragungseinrichtungen (16, 20) mit mindestens einem Client-Endgerät (14) verbunden ist, **dadurch gekennzeichnet, dass** das zentrale Endgerät (12) ein Endgerät nach einem der Ansprüche 1 bis 9 ist.

11. Verfahren zur Erfassung einer Unterbrechung in optischen Übertragungseinrichtungen (16, 20), die ein zentrales Endgerät (12) und mindestens ein Client-Endgerät (14) eines optischen Telekommunikationsnetzwerks verbinden, das die folgenden Schritte enthält:
- Erzeugung, durch das zentrale Endgerät (12), eines kontinuierlichen optischen Abwärtssignals der Wellenlänge λᵢᵢ,
- Übertragung dieses Signals an das Client-Endgerät (14) in optischen Übertragungseinrichtungen (16, 20, 36),
wobei das kontinuierliche optische Abwärtssignal der Wellenlänge λᵢᵢ eine Anfangsleistung höher als ein Schwellwert des Auftretens eines stimulierten Brillouin-Effekts hat, Schwellwert, oberhalb dessen das kontinuierliche optische Signal ein optisches Aufwärtssignal der Brillouin-Rückstreuung der Wellenlänge λ'ᵢᵢ induziert, **dadurch gekennzeichnet, dass** es einen Schritt der Analyse der Leistung des optischen Brillouin-Rückstreuungssignals der Wellenlänge λ'ᵢᵢ durch das zentrale Endgerät (12) enthält.
